# EUROPEAN PATENT APPLICATION

(11) **EP 4 123 588 A1**
(43) Date of publication of application: **25.01.2023**
(21) Application number: 21771212.4
(22) Date of filing: 03.03.2021
(51) Int. Cl.: G06T 19/00, G06T 15/20

(54) **IMAGE PROCESSING DEVICE AND MOVING-IMAGE DATA GENERATION METHOD**

(30) Priority: 17.03.2020 JP 2020046666
(71) Applicant: Sony Group Corporation, Tokyo 108-0075 (JP)
(72) Inventor: SUGANO, Hisako, Tokyo 108-0075 (JP); TANAKA, Junichi, Tokyo 108-0075 (JP); HIROTA, Yoichi, Tokyo 108-0075 (JP)
(74) Representative: D Young & Co LLP
(86) International application number: PCT/JP2021/008046
(87) International publication number: WO 2021/187093

(57) **Abstract**

The present technology relates to an image processing device and a moving image data generation method capable of easily searching for 3D model data.

The image processing device includes: a storage unit that stores a plurality of 3D models and a plurality of 3D model feature amounts respectively corresponding to the plurality of 3D models; a search unit that searches for a 3D model having a feature amount similar to an input feature amount of a subject on the basis of the feature amount of the subject and the 3D model feature amounts stored in the storage unit; and an output unit that outputs the 3D model searched by the search unit. The present technology can be applied to, for example, an image processing device that searches for a 3D model.

## Description

### TECHNICAL FIELD

The present technology relates to an image processing device and a moving image data generation method, and more particularly, to an image processing device and a moving image data generation method capable of easily searching for 3D model data.

### BACKGROUND ART

There is a technology for generating a 3D model of a subject from a moving image captured from multiple viewpoints and generating a virtual viewpoint image which is a 2D image of the 3D model according to an arbitrary viewing position (virtual viewpoint) to provide an image of a free viewpoint. This technology is also called a volumetric capture technology or the like.

For example, Patent Document 1 proposes a method in which the moving image data (3D model data) of the 3D model of the subject is converted into a plurality of texture images and depth images captured from a plurality of viewpoints to be transmitted to a reproduction device, and is displayed on a reproduction side.

### CITATION LIST

### PATENT DOCUMENT

Patent Document 1: WO 2017/082076 A

### SUMMARY OF THE INVENTION

### PROBLEMS TO BE SOLVED BY THE INVENTION

Meanwhile, in a case where a moving image of a 3D model in which a person as the subject performs a predetermined motion is to be generated, there is a request for searching for a moving image of an existing 3D model in which a similar motion is performed. However, it is not easy to search for the moving image of the existing 3D model in which the similar motion is performed.

The present technology has been made in view of such a situation, and enables easy search of 3D model data.

### SOLUTIONS TO PROBLEMS

An image processing device according to a first aspect of the present technology includes: a storage unit that stores a plurality of 3D models and a plurality of 3D model feature amounts respectively corresponding to the plurality of 3D models; a search unit that searches for a 3D model having a feature amount similar to an input feature amount of a subject on the basis of the feature amount of the subject and the 3D model feature amounts stored in the storage unit; and an output unit that outputs the 3D model searched by the search unit.

In the first aspect of the present technology, the plurality of 3D models and the plurality of 3D model feature amounts respectively corresponding to the plurality of 3D models are stored in the storage unit, the 3D model having a feature amount similar to the input feature amount of the subject is searched for on the basis of the feature amount of the subject and the 3D model feature amounts stored in the storage unit, and the searched 3D model is output.

An image processing device according to a second aspect of the present technology includes: a rendering unit that generates a free viewpoint image obtained by viewing a 3D model, which is searched to have a feature amount similar to a feature amount of a subject on the basis of the feature amount of the subject and a stored feature amount of the 3D model, from a predetermined virtual viewpoint.

In the second aspect of the present technology, the free viewpoint image is generated which is obtained by viewing the 3D model, which is searched to have a feature amount similar to the feature amount of the subject on the basis of the feature amount of the subject and the stored feature amount of the 3D model, from the predetermined virtual viewpoint.

A moving image data generation method according to a third aspect of the present technology includes: generating a moving image of a free viewpoint image obtained by viewing a moving image of a 3D model, which is searched to have a feature amount similar to a feature amount of a subject on the basis of the feature amount of the subject of an input moving image and a stored feature amount of the moving image of the 3D model, from a predetermined virtual viewpoint.

In the third aspect of the present technology, the moving image of the free viewpoint image is generated which is obtained by viewing the moving image of the 3D model, which is searched to have a feature amount similar to the feature amount of the subject on the basis of the feature amount of the subject of the input moving image and the stored feature amount of the moving image of the 3D model, from the predetermined virtual viewpoint.

The image processing devices according to the first and second aspects of the present technology can be implemented by causing a computer to execute a program. The program can be provided by being transmitted via a transmission medium or by being recorded in a recording medium.

The image processing device may be an independent device or an internal block configuring one device.

### BRIEF DESCRIPTION OF DRAWINGS

Fig. 1 is a block diagram illustrating a configuration example of a first embodiment of an image processing system to which the present technology is applied.
Fig. 2 is a diagram illustrating an example of an imaging space in a case where 3D model data is generated.
Fig. 3 is a diagram for explaining a data format of general 3D model data.
Fig. 4 is a diagram for explaining moving image data of an existing 3D model stored in a 3D model DB.
Fig. 5 is a diagram for explaining a process of generating moving image data of a new 3D model.
Fig. 6 is a flowchart for explaining a moving image generation/display process by the image processing system in Fig. 1.
Fig. 7 is a detailed flowchart of a new 3D model data generation process in step S5 of Fig. 6.
Fig. 8 is a detailed flowchart of a free viewpoint image display process in step S6 in Fig. 6.
Fig. 9 is a diagram for explaining an example of generating and displaying a moving image of a free viewpoint image of a high frame rate.
Fig. 10 is a block diagram illustrating a configuration example of a second embodiment of the image processing system to which the present technology is applied.
Fig. 11 is a block diagram illustrating a modification of the second embodiment of the image processing system.
Fig. 12 is a block diagram illustrating a configuration example of a third embodiment of the image processing system to which the present technology is applied.
Fig. 13 is a block diagram illustrating a configuration example of an embodiment of a computer to which the present technology is applied.

### MODE FOR CARRYING OUT THE INVENTION

Hereinafter, modes (hereinafter, referred to as an embodiments) for carrying out the present technology will be described with reference to the accompanying drawings. Note that in the present specification and the drawings, components having substantially the same functional configuration are designated by the same reference numerals to omit duplicate description. The description will be given in the following order.
1. First embodiment of image processing system
2. Configuration of 3D model data
3. Moving image data generation process of new 3D model
4. Flowchart of moving image generation process
5. Example of high frame rate conversion
6. Second embodiment of image processing system
7. Third embodiment of image processing system
8. Modification
9. Computer configuration example

### <1. First Embodiment of image processing system>

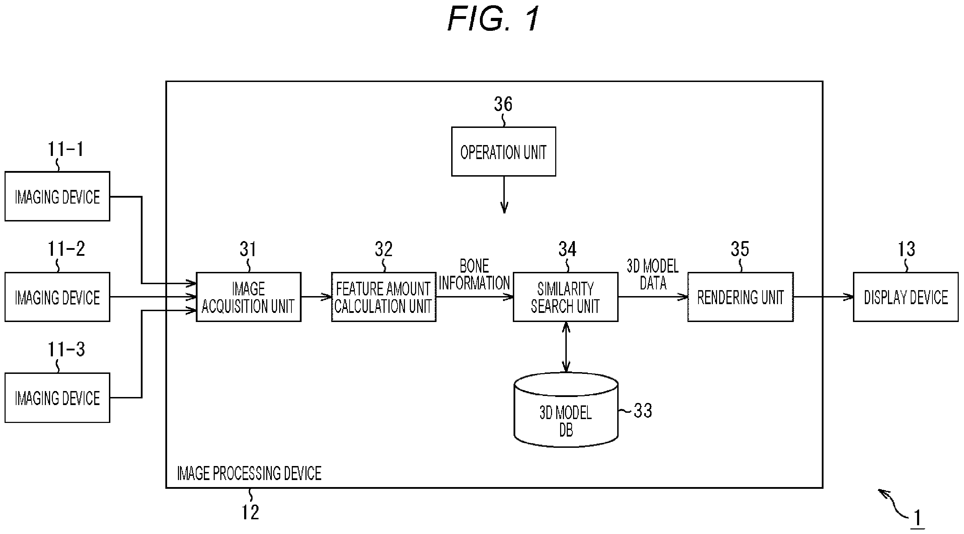

Fig. 1 is a block diagram illustrating a configuration example of a first embodiment of an image processing system to which the present technology is applied.

An image processing system 1 in Fig. 1 includes a plurality of imaging devices 11 (11-1 to 11-3), an image processing device 12 which generates a moving image of a predetermined subject by using images captured by the imaging devices 11, and a display device 13 which displays the moving image generated by the image processing device 12.

The image processing device 12 includes an image acquisition unit 31, a feature amount calculation unit 32, a 3D model DB 33, a similarity search unit 34, a rendering unit 35, and an operation unit 36.

The image processing device 12 generates a moving image of a 3D model of the subject from the moving image of the subject captured by the three imaging devices 11-1 to 11-3. Moreover, the image processing device 12 generates a 2D moving image which is a two-dimensional (2D) moving image obtained by viewing the generated moving image of the 3D model of the subject from an arbitrary virtual viewpoint, and causes the display device 13 to display the 2D moving image.

Originally, in a case where a moving image of a 3D model in which a predetermined person as the subject is performing a predetermined motion is to be generated, it is necessary to image the subject with a large number (about several tens) of imaging devices 11 arranged to surround the person as the subject. Then, the three-dimensional shape of the subject is specified by a method such as visual hull by using a large number of captured images obtained by imaging the subject from a large number of viewpoints, and the moving image data of the 3D model of the subject is generated. Note that, in the following description, even in the case of being simply referred to as a 3D model, the 3D model represents the moving image data of the 3D model.

However, in a case where a 3D model having a motion different from that of the 3D model generated in the past is to be generated, it is difficult to prepare an environment of several tens of imaging devices 11 and perform imaging each time.

In this regard, the image processing system 1 of Fig. 1 is a system which can simply generate a new 3D model by using the 3D model (hereinafter, referred to as an existing 3D model) generated in the past. The existing 3D model used for generating the new 3D model is not limited to one generated by the image processing system 1 itself in the past, and may be one generated by another system or device in the past. (The moving image of) the new 3D model of the subject generated by the image processing device 12 and corresponding to the moving image of the subject captured by the imaging devices 11-1 to 11-3 is distinguished from the existing 3D model and referred to as the new 3D model.

The number of the imaging devices 11 configuring a part of the image processing system 1 is, for example, about one to three, which is smaller compared with a case where the 3D model is generated by a general method. In the image processing system 1 of Fig. 1, a configuration using three imaging devices 11-1 to 11-3 is illustrated, but one or two imaging devices may be used.

Furthermore, in the moving image captured by each imaging device 11, the motion performed by the person as the subject is at least partially different from the motion performed by the person of the existing 3D model stored in the 3D model DB 33 of the image processing device 12.

Each of the three imaging devices 11-1 to 11-3 images the person as the subject and supplies the moving image data of the person obtained as a result to (the image acquisition unit 31 of) the image processing device 12.

The image acquisition unit 31 acquires the moving image data (captured image) of the person supplied from each of the imaging devices 11-1 to 11-3, and supplies the moving image data to the feature amount calculation unit 32.

The feature amount calculation unit 32 calculates a feature amount indicating the feature of the motion of the person as the subject by using the moving image data of the person supplied from each of the imaging devices 11-1 to 11-3, and supplies the calculated feature amount to the similarity search unit 34. Specifically, the feature amount calculation unit 32 estimates the joint position of the person in the moving image, and calculates, as the feature amount of the motion of the person, bone information indicating the posture of the person by using the joint position.

The bone information is a value indicating where each joint position of the person as the subject is positioned in the image, and is expressed by, for example, for each joint of the person, a joint id for identifying the joint, position information (u,v) indicating the two-dimensional position of the joint, and rotation information R indicating the rotation direction of the joint. Furthermore, there is also a case where the bone information is expressed by, for each joint of the person, the joint id for identifying the joint, position information (x,y,z) indicating a three-dimensional position of the joint, and the rotation information R indicating the rotation direction of the joint by using machine learning. The joint positions of the person generated as the bone information can be set to, for example, a nose (id = 0), a heart (id = 1), a right shoulder (id = 2), a right elbow (id = 3), a right wrist (id = 4), a left shoulder (id = 5), a left elbow (id = 6), a left wrist (id = 7), a right waist (id = 8), a right knee (id = 9), a right ankle (id = 10), a left waist (id = 11), a left knee (id = 12), a left ankle (id = 13), a right eye (id = 14), a left eye (id = 15), a right ear (id = 16), a left ear (id = 17), and the like. In addition, the feature point of the face, the joints of hands and fingers, and the like may also be set as the joint positions to express the skeleton of the person. A known algorithm can be used for the process of estimating the joint position of the person in the moving image. The bone information as the feature amount is calculated for every frame of the moving image and supplied to the similarity search unit 34.

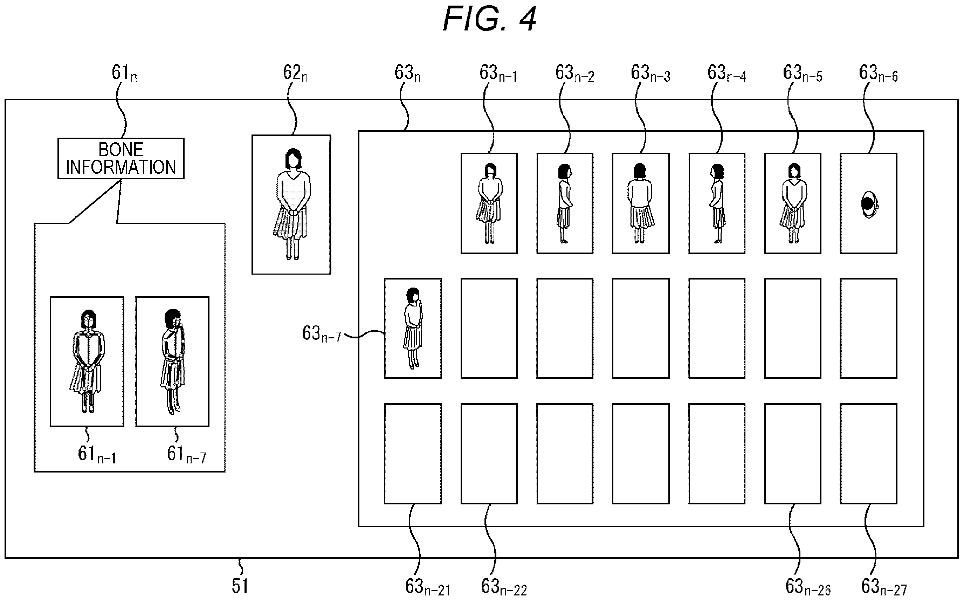

The 3D model DB 33 is a storage unit which stores a large number of existing 3D models generated in the past and in which the person as the subject performs a predetermined motion. The moving image data of each existing 3D model stored in the 3D model DB 33 has the bone information of the subject in units of frames of the moving image in addition to 3D shape data representing the 3D shape (geometry information) of the subject and texture data representing the color information of the subject. Details of the moving image data of each existing 3D model stored in the 3D model DB 33 will be described later with reference to Fig. 4.

The similarity search unit 34 searches the motions of one or more existing 3 models stored in the 3D model DB 33 for a motion similar to the motion of the subject of the moving image captured by the imaging device 11. For example, a motion (a motion in which a difference in feature amount is within a predetermined range) having a feature amount close to the feature amount indicating the feature of the motion of the subject of the captured moving image or a motion having a feature amount relatively close to the motion of the subject among the motions of the plurality of stored existing 3 models is searched for as the similar motion. More specifically, by using the bone information as the feature amount, the similarity search unit 34 searches the 3D model DB 33 for the bone information of the existing 3D model similar to the bone information of the subject of the captured moving image for every frame of the moving image captured by the imaging device 11.

Then, the similarity search unit 34 generates a new 3D model corresponding to the motion of the subject imaged by the imaging device 11 by arranging the frames of the moving image of the existing 3D model including the searched bone information similar to the bone information of the subject in the order of the frames of the moving image imaged by the imaging device 11. The moving image data (3D model data) of the generated new 3D model is supplied to the rendering unit 35.

The rendering unit 35 uses the moving image data of the new 3D model supplied from the similarity search unit 34 to generate a 2D moving image obtained by viewing the new 3D model from a predetermined virtual viewpoint, and causes the display device 13 to display the 2D moving image. The virtual viewpoint is designated from the operation unit 36.

The operation unit 36 receives the operation of the user such as acquisition of the image captured by the imaging device 11, an instruction to generate a new 3D model, and input of the virtual viewpoint, and supplies the received information to required units.

The image processing system 1 is configured as described above.

Note that, in a case where the image processing device 12 includes a display, the 2D moving image generated by the rendering unit 35 may be displayed on its own display instead of being displayed on the external display device 13. The image processing device 12 and the display device 13 may be configured as one device.

### <2. Configuration of 3D model data>

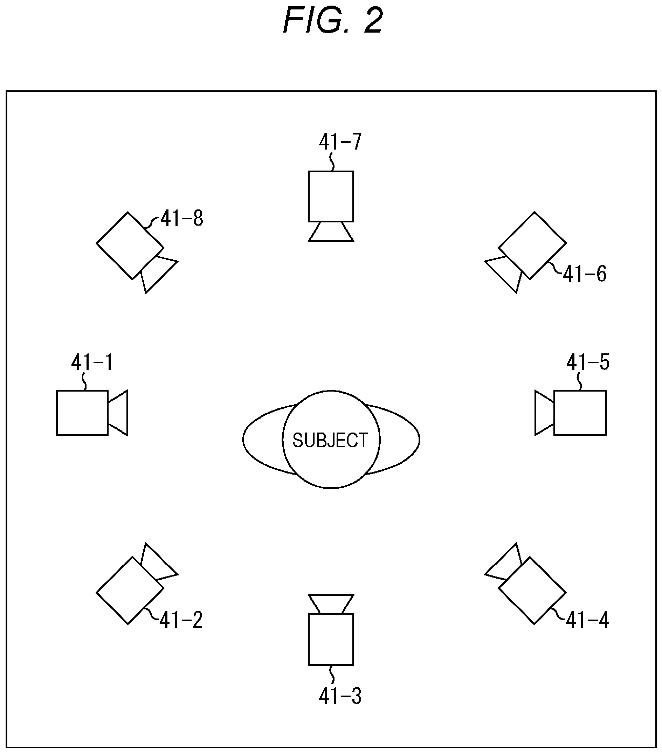

With reference to Figs. 2 to 4, the 3D model data used in the image processing system 1 will be described in comparison with general 3D model data.

First, the general 3D model data will be described.

In the case of generating 3D model data, as illustrated in Fig. 2, a plurality of imaging devices 41 is arranged around the subject such as the person to surround the subject, and the subject is imaged. Fig. 2 illustrates an example in which eight imaging devices 41-1 to 41-8 are arranged. However, when the number of imaging devices 41 increases, it is possible to generate a highly accurate 3D model with less influence of image interpolation, and several tens of imaging devices 41 may be used. Note that the arrangement of the imaging devices 41 is known.

For the imaging device 11 of the image processing system 1, a part of the same imaging device 41 as that used when the moving image data of the existing 3 model is generated may be used, or an imaging device and an arrangement different from those used when the moving image data of the existing 3 model is generated may be used.

The silhouettes of the subject at respective viewpoints are projected onto a 3D space by using the images captured by the respective imaging devices 41 in different imaging directions (viewpoints), the 3D shape of the subject is acquired by a visual hull obtained by forming the intersection regions of the silhouettes into a 3D shape, a multi view stereo using the consistency of texture information between the viewpoints, or the like, and 3D shape data is generated.

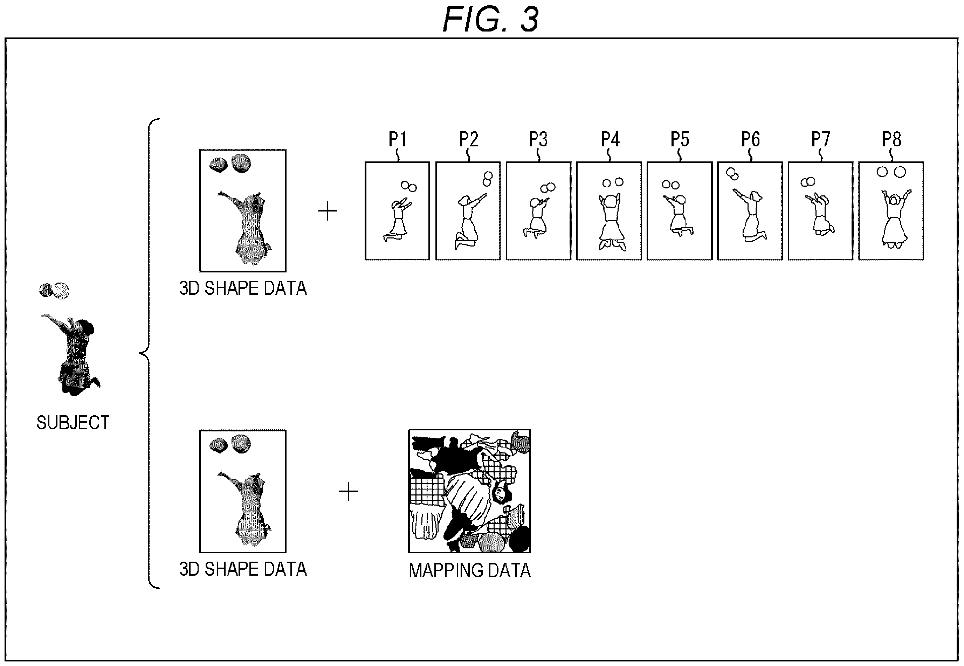

Fig. 3 illustrates an example of a data format of the general 3D model data.

The 3D model data is generally expressed by the 3D shape data representing the 3D shape (geometry information) of the subject and the texture data representing the color information of the subject.

The 3D shape data is expressed in, for example, for example, a point cloud format in which the three-dimensional position of the subject is represented by a set of points, a 3D mesh format which is called polygon mesh and is represented by a connection between a vertex and a vertex, or a voxel format which is represented by a set of cubes called voxels.

For example, the texture data has a multi-texture format which is held in the captured image (two-dimensional texture image) captured by each imaging device 41 or a UV mapping format which is held by expressing a two-dimensional texture image pasted to each point or each polygon mesh as 3D shape data in a UV coordinate system.

As illustrated in the upper part of Fig. 3, a format of describing the 3D model data with the 3D shape data and the multi-texture format held in a plurality of captured images captured by the imaging devices 41 is a view dependent format in which the color information can change depending on the virtual viewpoint (the position of a virtual camera).

On the other hand, as illustrated in the lower part of Fig. 3, a format of describing the 3D model data with the 3D shape data and the UV mapping format in which the texture information of the subject is mapped on the UV coordinate system is a view independent format in which the color information is the same regardless of the virtual viewpoint (the position of the virtual camera).

The existing 3D model stored in the 3D model DB 33 may be stored in any data format among the various data formats described above, but in the present embodiment, it is assumed that the existing 3D model is stored in the 3D model DB 33 with the 3D shape data and the multi-texture format in the view dependent format.

Moreover, as described above, the existing 3D model stored in the 3D model DB 33 has the bone information of the subject in units of frames of the moving image in addition to the 3D shape data representing the 3D shape (geometry information) of the subject and the texture data representing the color information of the subject.

The moving image data of the existing 3D model stored in the 3D model DB 33 will be described with reference to Fig. 4.

Fig. 4 illustrates an example of data of one frame (n-th frame) among a plurality of frames configuring a moving image which is the moving image data of one predetermined existing 3D model 51 among a large number of existing 3D models 51 stored in the 3D model DB 33.

The moving image data of the existing 3D model 51 includes, for every frame, bone information 61, 3D shape data 62, and a captured image 63 captured by each imaging device 41 at the time of imaging.

Fig. 4 is an example of data of the n-th frame among the plurality of frames configuring the moving image, and thus, n indicating a frame number is added to each data with a subscript, for example, to be bone information 61ₙ, 3D shape data 62ₙ, and a captured image 63ₙ.

Furthermore, the moving image data of the existing 3D model 51 in Fig. 4 is an example of data captured by the 27 imaging devices 41 at the time of imaging, and thus, the captured image 63ₙ of the n-th frame is stored as 27 captured images 63ₙ₋₁ to 63ₙ₋₂₇ corresponding to the 27 imaging devices 41 in the 3D model DB 33. The captured image 63ₙ₋₁ is the captured image 63 captured by the first imaging device 41-1, the captured image 63ₙ₋₂ is the captured image 63 captured by the second imaging device 41-2, and similarly, the captured image 63ₙ₋₂₇ is the captured image 63 captured by the 27-th imaging device 41-27. Since the number of imaging devices 41 at the time of imaging is the known number of viewpoints at the time of generating a free viewpoint image, the free viewpoint image (texture image) can be expressed with higher accuracy when the number of imaging devices increases.

The bone information 61ₙ of the n-th frame of the existing 3D model 51 includes the bone information extracted from at least one captured image 63 of 27 captured images 63ₙ₋₁ to 63ₙ₋₂₇ of the n-th frame. In the example of Fig. 4, the bone information 61ₙ includes bone information extracted from two captured images 63ₙ of bone information 61ₙ₋₁ extracted from the captured image 63ₙ₋₁ captured by the first imaging device 41-1 and bone information 61ₙ₋₇ extracted from the captured image 63ₙ₋₇ captured by the seventh imaging device 41-7.

The bone information 61ₙ illustrated in Fig. 4 has a format of being held in a two-dimensional format corresponding to the captured image 63, and is expressed by the joint id, the position information (u,v) indicating the two-dimensional position of the joint, and the rotation information R indicating the rotation direction of the joint described above. The bone information 61ₙ may have a format of being held in the above-described three-dimensional format. In this case, the bone information 61ₙ in a three-dimensional format is projected onto each imaging device 41, whereby the bone information corresponding to the captured image 63ₙ can be calculated.

Note that, for the bone information 61ₙ, in addition to the method of extracting the bone information 61ₙ from the captured image 63ₙ captured by the imaging device 41, imaging is performed in a state where a tracking sensor is attached to the joint position of the person as the subject at the time of imaging, and the sensor information of the tracking sensor can be used as the bone information 61ₙ. For example, the tracking sensor which can be used here includes a gyro sensor used in a smartphone or the like.

The bone information 61ₙ is information corresponding to the captured image 63ₙ, and is not image data but only position information and rotation information stored in a text format, and thus the data size of the bone information 61ₙ is extremely small, for example, about 1 KB.

In a case where the 3D model data of the existing 3D model 51 is stored in the 3D model DB 33, for example, the 3D model data can be encoded and stored by an encoding method such as an advanced video coding (AVC) method or a high efficiency video coding (HEVC) method. Since the data size of the bone information 61ₙ is extremely small, the bone information 61ₙ can be stored in a header or the like as meta information of texture data. Even in a case where the existing 3D model 51 or the new 3D model is transmitted to another device via a predetermined network, it is possible to transmit coded data encoded by such an encoding method.

As the meta information of the existing 3D model, for example, the following information can be held in addition to the bone information.
· Information indicating feature points such as the joint, posture, facial expression, and mouth movement of the person
· Voice information, music information
   For example, the gesture can be estimated from voice information such as "hurray! hurrah!" and "cheers". In addition, for example, some music such as music of radio calisthenics has a fixed motion (choreography) .
· The names of gestures (motions)
   For example, it is possible to set names indicating motions such as "bye-bye", "jump", "walk", and "run".
· The name, sex, height, weight, and age of the person
· Imaging environment
· Clothes
· The number of people
   There may be one subject or a plurality of subjects.
· The names of animals, devices (robots), and the like other than the person
   Dog, cat, or the like

It is not necessary to hold all the above information as the meta information, and any one of the pieces of information may be held, or arbitrary information can be selected and held. Furthermore, the meta information may be held in units of captured images 63 of the existing 3D model 51, or may be held in units of 3D models. When such meta information is held, it is useful in a case where the bone information of the moving image captured by the imaging device 11 is compared with the bone information of the existing 3 model stored in the 3D model DB 33 to search for a similar motion. That is, the search for a similar motion can be executed with high accuracy and high speed.

### <3. Moving image data generation process of new 3D model>

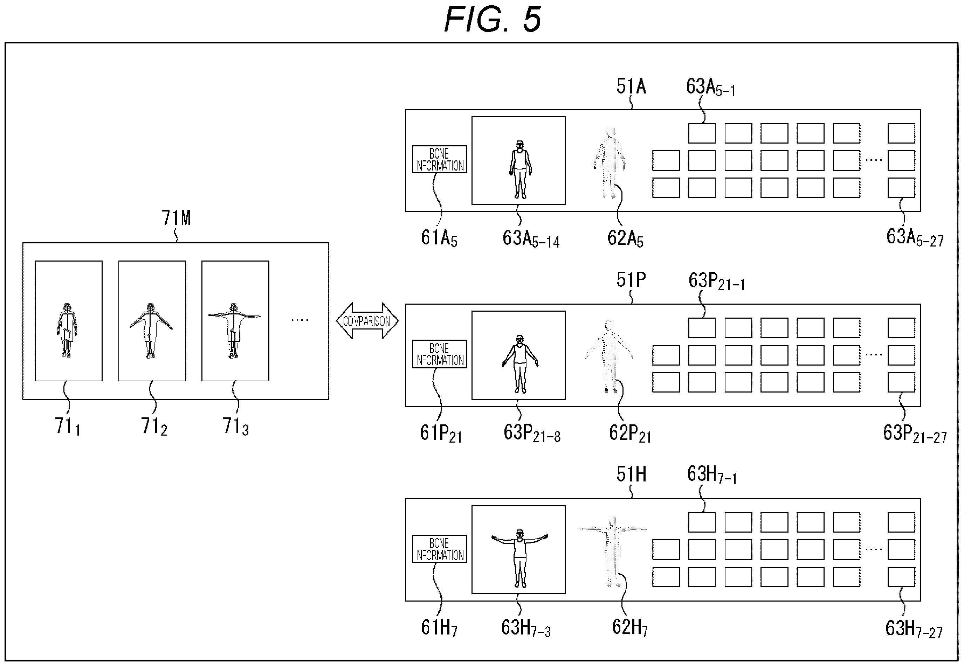

Next, a process in which the image processing device 12 generates the moving image data of the new 3D model corresponding to the moving image captured by the imaging device 11 will be described with reference to Fig. 5. Note that, in the example of Fig. 5, for the sake of simplicity, the number of the imaging devices 11 which image the subject is set to one.

One imaging device 11 images the person as the subject, and a moving image 71M obtained as a result is supplied as an input moving image to the image acquisition unit 31 of the image processing device 12. As illustrated in Fig. 5, the input moving image 71M input from the imaging device 11 to the image processing device 12 includes a captured image 71₁ of a first frame, a captured image 71₂ of a second frame, and a captured images 71₃ of a third frame, and so on.

The feature amount calculation unit 32 calculates, for every frame, a feature amount indicating the feature of the motion of the person as the subject included in the input moving image 71M, and supplies the feature amount to the similarity search unit 34. More specifically, the feature amount calculation unit 32 estimates each joint position of the person as the feature amount for each frame of the captured image 71₁ of the first frame, the captured image 71₂ of the second frame, the captured images 71₃ of the third frame, and so on. Furthermore, when estimating the joint position as the feature amount for each frame of the input moving image 71M, the feature amount calculation unit 32 also calculates a reliability as information indicating the accuracy of an estimation result together. The calculation of the reliability of the joint position is generally used, for example, for detection of a movement that cannot be the posture (skeleton) of the person. For every captured image 71 configuring the input moving image 71M, each joint position information and the reliability of the person calculated by the feature amount calculation unit 32 are supplied to the similarity search unit 34.

The similarity search unit 34 executes a process of searching one or more existing 3D models 51 stored in the 3D model DB 33 for a motion similar to the motion of the person appearing in the input moving image 71M supplied from the feature amount calculation unit 32.

As described with reference to Fig. 4, the existing 3D model 51 is moving image data, and includes, for every frame, the bone information 61, the 3D shape data 62, and the plurality of captured images 63 captured by the plurality of imaging devices 41. Thus, for every frame of each captured image 71 configuring the input moving image 71M, the similarity search unit 34 searches (detects) for a predetermined frame (captured image 63) of the existing 3D model 51 having the most similar motion.

In the example of Fig. 5, as a result of the search by the similarity search unit 34, bone information 61As, 3D shape data 62As, and captured images 63A₅ (63A₅₋₁ to 63A₅₋₂₇) of a fifth frame of an existing 3D model 51A stored in the 3D model DB 33 are searched for as the frame of the existing 3D model 51 most similar to the captured image 71₁ of the first frame of the input moving image 71M. Among the 27 captured images 63A₅₋₁ to 63A₅₋₂₇, the captured image 63A₅₋₁₄ captured by the 14-th imaging device 41-14 is the captured image 63As captured at the viewpoint most similar to the viewpoint of the captured image 71₁ of the first frame.

Furthermore, bone information 61P₂₁, 3D shape data 62P₂₁, and captured images 63P₂₁ (63P₂₁₋₁ to 63P₂₁₋₂₇) of a 21-th frame of an existing 3D model 51P stored in the 3D model DB 33 are searched for as the frame of the existing 3D model 51 most similar to the captured image 71₂ of the second frame of the input moving image 71M. Among the 27 captured images 63P₂₁₋₁ to 63P₂₁₋₂₇, the captured image 63P₂₁₋₈ captured by the eighth imaging device 41-8 is the captured image 63P₂₁ captured at the viewpoint most similar to the viewpoint of the captured image 71₂ of the second frame.

Moreover, bone information 61H₇, 3D shape data 62H₇, and captured images 63H₇₁ (63H₇₋₁ to 63H₇₋₂₇) of a seventh frame of an existing 3D model 51H stored in the 3D model DB 33 are searched for as the frame of the existing 3D model 51 most similar to the captured image 71₃ of the third frame of the input moving image 71M. Among the 27 captured images 63H₇₋₁ to 63H₇₋₂₇, the captured image 63H₇₋₃ captured by the third imaging device 41-3 is the captured image 63H₇ captured at the viewpoint most similar to the viewpoint of the captured image 71₃ of the third frame.

Similarly, for each of the captured images 71 of the fourth and subsequent frames of the input moving image 71M, the plurality of existing 3D models 51 stored in the 3D model DB 33 is searched for the frame (captured image 63) having the most similar motion.

Note that, in a case where the motion of the person of the input moving image 71M repeatedly performs the same motion, the moving image data of the new 3D model can be generated with a small number of existing 3D models 51. For example, in a case where the input moving image 71M is a motion such as repetition of the captured images 71₁ to 71₃ of the first frame to third frame, the moving image data of the new 3D model can generate the moving image of the free viewpoint image only with three existing 3D models 51 of the existing 3D model 51A, the existing 3D model 51P, and the existing 3D model 51H.

As described above, for each frame of the input moving image 71M captured by a small number of imaging devices 11 and input to the image processing device 12, the frame of the moving image of the existing 3D model 51 having the most similar motion is searched for.

When each frame of the moving image of the existing 3D model 51 which is searched for with respect to each frame of the input moving image 71M is arranged in the order of the frames of the input moving image 71M, a new 3D model corresponding to the motion of the subject imaged by the imaging device 11 is generated. In other words, the moving image data of the 3D model with the same accuracy as that when imaging is performed by using the 27 imaging devices 11 (imaging devices 41) is generated from the input moving image 71M imaged by the small number of imaging devices 11, and is supplied as the moving image data of the new 3D model to the rendering unit 35. The number of frames of the generated moving image data of the new 3D model is the same as the number of frames of the input moving image 71M.

### <4. Flowchart of moving image generation process>

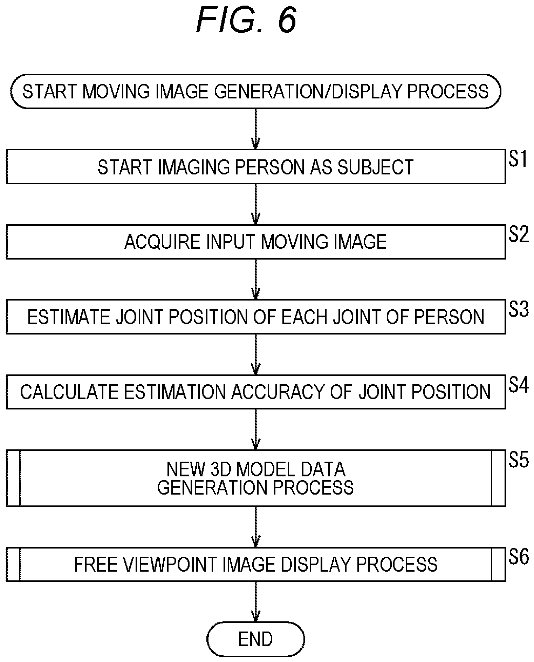

Next, with reference to the flowchart of Fig. 6, a moving image generation/display process will be described which is a process in the image processing system 1 of Fig. 1 in a case where processing is continuously executed such that the subject is imaged by the imaging device 11, a new 3D model is generated, and a 2D moving image obtained by viewing the generated new 3D model from the predetermined virtual viewpoint is displayed on the display device 13.

This process is started, for example, in a case where the imaging device 11 or the image processing device 12 is instructed to start imaging the subject (person) by the imaging device 11.

First, in step S1, three imaging devices 11-1 to 11-3 start imaging the person as the subject. The moving images captured by the respective imaging devices 11 are sequentially supplied to the image processing device 12 as input moving images.

It is sufficient if the moving image supplied as the input moving image to the image processing device 12 can specify the motion of the person, and thus, for example, an image (moving image or still image) in which the user creates the motion of the person by handwriting, a CG moving image of an existing motion separately created in advance, or the like may be used as the input. Furthermore, the sensor information of the tracking sensor corresponding to the information of the joint position calculated as the feature amount in subsequent step S3 may be used as the input.

In step S2, the image acquisition unit 31 of the image processing device 12 acquires the moving image data of the input moving image supplied from each imaging device 11, and supplies the moving image data to the feature amount calculation unit 32.

In step S3, the feature amount calculation unit 32 calculates the feature amount indicating the feature of the motion of the person for every frame by using the moving image data of the person supplied from each of the imaging devices 11-1 to 11-3, and supplies the calculated feature amount to the similarity search unit 34. Specifically, the feature amount calculation unit 32 estimates the joint position of each joint of the person as the feature amount for every frame of the input moving image. In a case where the person as the subject is imaged by the plurality of imaging devices 11, the joint position can be estimated with high accuracy by using a process of matching the feature points or a principle of triangulation. In a case where there is one imaging device 11, it is possible to specify the size of the person and estimate the joint position by allowing the user to input (designate) the height and the like.

In step S4, the feature amount calculation unit 32 calculates a reliability as the estimation accuracy of the estimated joint position of each joint, and supplies the reliability to the similarity search unit 34.

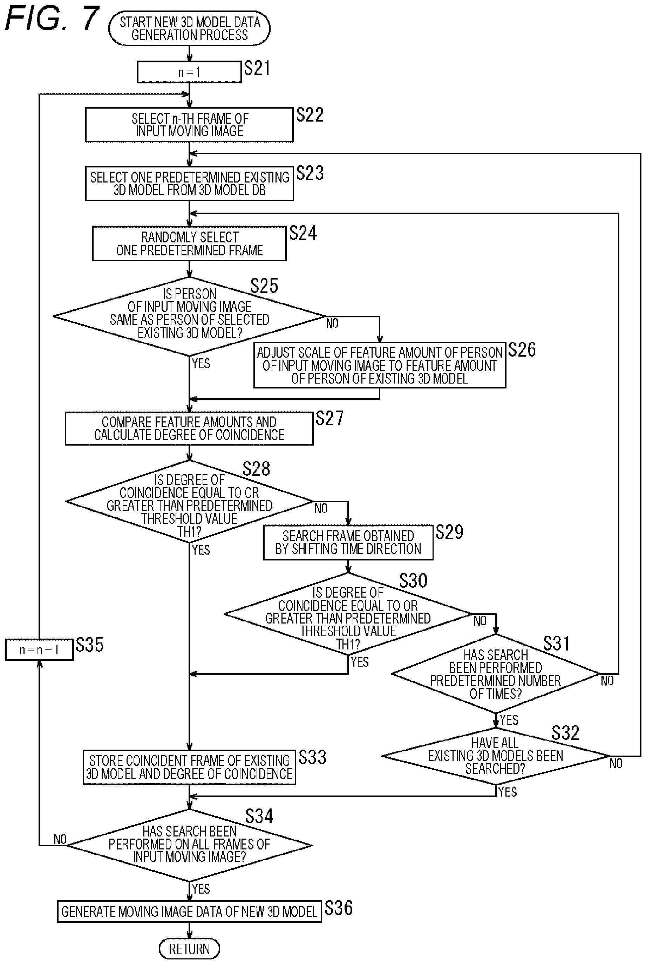

In step S5, the similarity search unit 34 executes a new 3D model data generation process of generating moving image data of the new 3D model. Although details of this process will be described later with reference to Fig. 7, for every frame of each captured image 71 configuring the input moving image 71M, a predetermined frame (captured image 63) of the existing 3D model 51 having a motion most similar to the movement of the person of the input moving image 71M is searched for, and is arranged in the same frame order as the input moving image 71M, whereby the moving image data of the new 3D model is generated. The generated moving image data of the new 3D model is supplied to the rendering unit 35. In the moving image data of the new 3D model supplied to the rendering unit 35, the bone information may remain included in the header or the like, or only 3D shape data and texture data may be used similarly to general 3D model data since the bone information is unnecessary for a rendering process.

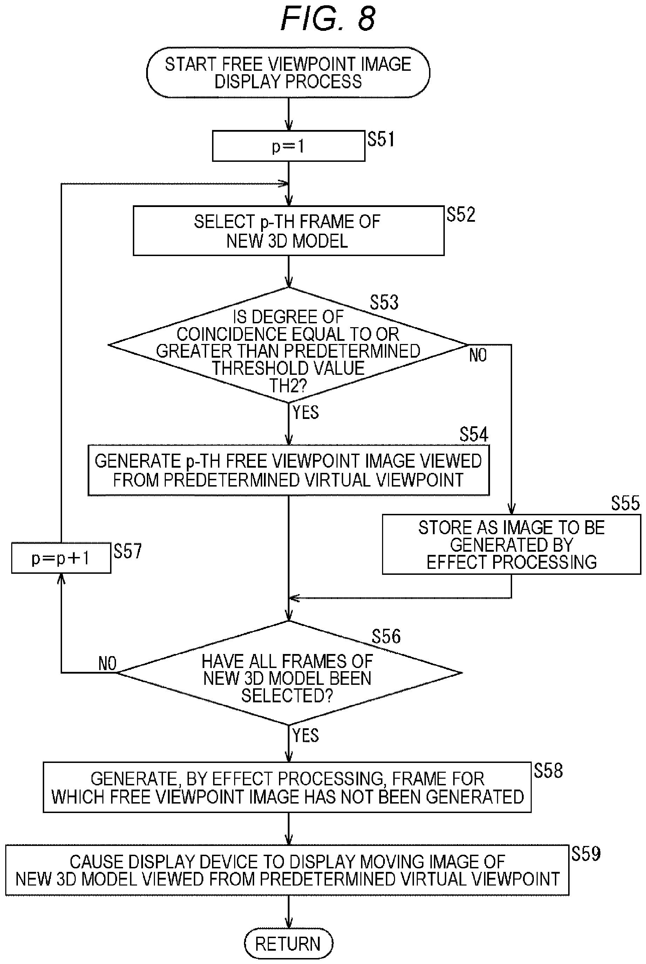

In step S6, the rendering unit 35 executes a free viewpoint image display process of generating a free viewpoint image by using the moving image data of the new 3D model supplied from the similarity search unit 34 and causing the display device 13 to display the free viewpoint image. Although details of the free viewpoint image display process will be described later with reference to Fig. 8, a 2D moving image obtained by viewing the new 3D model supplied from the similarity search unit 34 from the predetermined virtual viewpoint is generated as the free viewpoint image and displayed on the display device 13. The virtual viewpoint is designated from the operation unit 36, for example.

This is the end of the moving image generation process. In the moving image generation process, in a case where the estimation accuracy calculated in step S4 is low (the reliability is equal to or less than a predetermined value), the processing in and after step S5 may be stopped, or in step S5, a plurality of existing 3D models 51 having a motion similar to the motion of the input moving image 71M may be extracted for each frame, and a predetermined one of the plurality of existing 3D models 51 may be selected by the user to determine the existing 3D model 51 having the similar motion.

Fig. 7 is a detailed flowchart of the new 3D model data generation process executed in step S5 of Fig. 6.

In this process, first, in step S21, the similarity search unit 34 sets 1, which is an initial value, to a variable n for identifying the frame number of the input moving image 71M supplied from the feature amount calculation unit 32.

In step S22, the similarity search unit 34 selects the n-th frame (captured image 71ₙ) of the input moving image 71M.

In step S23, the similarity search unit 34 selects one predetermined existing 3D model 51 from the 3D model DB 33.

In step S24, the similarity search unit 34 randomly selects one predetermined frame (captured image 63) of the selected existing 3D model 51.

In step S25, the similarity search unit 34 determines whether the person of the input moving image 71M is the same as the person of the selected existing 3D model 51. In a case where information such as the name, sex, height, weight, and age of the person is held as the meta information, whether the person of the input moving image 71M is the same as the person of the selected existing 3D model 51 can be determined by using the information. In a case where such meta information is not held, for example, the determination can be made by face recognition or the like.

In a case where it is determined in step S25 that the person of the input moving image 71M is not the same as the person of the selected existing 3D model 51, the processing proceeds to step S26, and the similarity search unit 34 adjusts the scale of the feature amount of the person of the input moving image 71M to the feature amount of the person of the existing 3D model 51. For example, the entire length of the skeleton of the person of the input moving image 71M is scaled to match the entire length of the skeleton of the person of the existing 3D model 51. In addition to the joint positions, the scaling may be performed for every body part such as a right arm, a left arm, a torso, a right foot, a left foot, a head, and the like.

On the other hand, in a case where it is determined in step S25 that the person of the input moving image 71M is the same as the person of the selected existing 3D model 51, the processing of step S26 is skipped, and the processing proceeds to step S27.

In step S27, the similarity search unit 34 compares the feature amount of the input moving image 71M with the feature amount of the selected existing 3D model 51, and calculates the degree of coincidence. For example, the similarity search unit 34 can compare the joint positions of the respective joints as the bone information and calculate the degree of coincidence by the inverse of the total value of the differences in the position information or the like.

In step S28, the similarity search unit 34 determines whether the calculated degree of coincidence is equal to or greater than a predetermined threshold value TH1 set in advance. The threshold value TH1 is a value of the degree of coincidence corresponding to a case where it is determined to be most similar in the similar motion search described in Fig. 5.

In a case where it is determined in step S28 that the calculated degree of coincidence is not equal to or greater than the predetermined threshold value TH1, the processing proceeds to step S29, and the similarity search unit 34 searches a frame obtained by shifting a time direction with respect to the currently selected frame. That is, the similarity search unit 34 selects a plurality of frames (captured images 71) obtained by shifting the time direction within a predetermined range on the basis of the captured image 63 randomly selected in step S24, and calculates the degree of coincidence of the feature amounts.

In step S30, the similarity search unit 34 determines whether the degree of coincidence of one or more frames searched while shifting the time direction is equal to or greater than the predetermined threshold value TH1.

In a case where it is determined in step S30 that the degree of coincidence of one or more frames searched with shifting the time direction is not equal to or greater than the predetermined threshold value TH1, the processing proceeds to step S31, and the similarity search unit 34 determines whether a random search with respect to the currently selected existing 3D model 51 has been performed a predetermined number of times.

In a case where it is determined in step S31 that the currently selected existing 3D model 51 has not been searched the predetermined number of times, the processing returns to step S24, and steps S24 to S33 are repeated.

On the other hand, in a case where it is determined in step S31 that the currently selected existing 3D model 51 has been searched the predetermined number of times, the processing proceeds to step S32, and the similarity search unit 34 determines whether all the existing 3D models 51 stored in the 3D model DB 33 have been selected.

In a case where it is determined in step S32 that not all the existing 3D models 51 stored in the 3D model DB 33 have been selected, the processing returns to step S23, and steps S23 to S33 are repeated.

On the other hand, in a case where it is determined in step S32 that all the existing 3D models 51 stored in the 3D model DB 33 have been selected, the processing proceeds to step S34.

On the other hand, in a case where it is determined in step S28 described above that the calculated degree of coincidence is equal to or greater than the predetermined threshold value TH1, the processing proceeds to step S33, and the similarity search unit 34 stores the coincident frame (captured image 63) of the existing 3D model 51 and the degree of coincidence in an internal memory.

Summarizing the processing executed in steps S22 to S33, for the n-th frame (captured image 71) of the selected input moving image 71M, it is searched whether there is a frame having a degree of coincidence equal to or greater than the predetermined threshold value TH1 among the selected frame randomly selected from the selected existing 3D model 51 and the frames shifted in the time direction. In a case where there is no frame having a degree of coincidence equal to or greater than the predetermined threshold value TH1, the process of randomly selecting and searching the frame of the selected existing 3D model 51 is repeated a plurality of times. In a case where there is no frame having a degree of coincidence equal to or greater than the predetermined threshold value TH1 although a predetermined number of times of random selection is made with respect to the selected existing 3D model 51, the similarity search unit 34 determines that there is no frame of similar motion in the selected existing 3D model 51, selects another existing 3D model 51 again, and searches each existing 3D model 51 of the 3D model DB 33 until a frame having a degree of coincidence equal to or greater than the predetermined threshold value TH1 is detected.

In step S34, the similarity search unit 34 determines whether the search has been performed with respect to all the frames of the input moving image 71M.

In a case where it is determined in step S34 that the search has not been performed with respect to all the frames of the input moving image 71M, the processing proceeds to step S35, and the similarity search unit 34 increments the variable n for identifying the frame number of the input moving image 71M by one, and then returns the processing to step S22. Therefore, steps S22 to S34 described above are executed for the next frame of the input moving image 71M.

On the other hand, in a case where it is determined in step S34 that the search has been performed with respect to all the frames of the input moving image 71M, the processing proceeds to step S36, and the similarity search unit 34 generates moving image data of the new 3D model by arranging the coincident frames of the existing 3D model 51 stored in the internal memory in the same frame order as that of the input moving image 71M, and supplies the moving image data to the rendering unit 35.

The degree of coincidence stored together with the frame of the existing 3D model 51 is also supplied to the rendering unit 35. Note that the degree of coincidence may be in units of body parts or 3D models, instead of in units of the frames of the existing 3D model 51 corresponding to the frames of the input moving image 71M.

Then, the new 3D model data generation process ends, and the processing returns to Fig. 6 and proceeds to the next step S6.

According to the above new 3D model data generation process, the frame (captured image 63) of the existing 3D model 51 having a degree of coincidence equal to or greater than the predetermined threshold value TH1 is searched with respect to each frame (captured image 71) of the input moving image 71M, and each searched frame of the existing 3D model 51 and the degree of coincidence are supplied as the moving image data of the new 3D model to the rendering unit 35.

In the above-described new 3D model data generation process, in a case where the joint positions of joints as the bone information cannot be compared to detect the similar frame of the existing 3D model 51, a process of comparing the two-dimensional texture image of the existing 3D model stored in the multi-texture format with each frame (captured image 71) of the input moving image 71M to search for the similar frame (captured image 63) of the existing 3D model 51 may be added.

In the example described above, similarly to the processing described in Fig. 5 and the like, it has been described that the entire body of the person as the subject is imaged in the image of the input moving image 71M. However, for example, in a case where the person of the input moving image 71M is a part of the body such as only an upper body, it is sufficient if the degree of coincidence with the person of the existing 3D model 51 is also searched by comparison in only the corresponding part.

In the example described above, an example has been described in which the coincident frame of the existing 3D model 51 is randomly selected and searched, but instead of being randomly selected, the frame may be selected and searched sequentially from the head frame. However, the search can be performed at a higher speed by randomly selecting and searching.

Furthermore, in the above-described example, only one frame of the frame of the existing 3D model 51 coincident with each frame of the input moving image 71M is supplied to the rendering unit 35, but a plurality of frames including frames before and after the coincident frame may be supplied to the rendering unit 35. The frames before and after the coincident frame can be used for effect processing and the like in the generation of the free viewpoint image in Fig. 8 to be described later.

Fig. 8 is a detailed flowchart of the free viewpoint image display process executed in step S6 of Fig. 6.

In this process, first, in step S51, the rendering unit 35 sets 1, which is an initial value, to a variable p for identifying the frame number of the new 3D model.

In step S52, the rendering unit 35 selects a p-th frame of the new 3D model.

In step S53, the rendering unit 35 determines whether the degree of coincidence of the p-th frame of the new 3D model is equal to or greater than a predetermined threshold value TH2. The threshold value TH2 may be the same as or different from the threshold value TH1 of the new 3D model data generation process of Fig. 7.

In a case where it is determined in step S53 that the degree of coincidence of the p-th frame of the new 3D model is equal to or greater than the predetermined threshold value TH2, the processing proceeds to step S54, and the rendering unit 35 generates a p-th free viewpoint image obtained by viewing the new 3D model from the predetermined virtual viewpoint by using the p-th frame of the new 3D model. The p-th free viewpoint image is generated by perspective-projecting the new 3D model onto the viewing range of the virtual viewpoint.

On the other hand, in a case where it is determined in step S53 that the degree of coincidence of the p-th frame of the new 3D model is smaller than the predetermined threshold value TH2, the processing proceeds to step S55, and the rendering unit 35 stores the p-th free viewpoint image as an image to be generated by the effect processing in the internal memory.

After step S54 or S55, the processing proceeds to step S56, and the rendering unit 35 determines whether all the frames of the new 3D model have been selected.

In a case where it is determined in step S56 that not all the frames of the new 3D model have been selected, the processing proceeds to step S57, and the rendering unit 35 increments the variable p for identifying the frame number of the new 3D model by one, and then returns the processing to step S52. Therefore, the processing of steps S52 to S56 described above is executed for the next frame of the new 3D model.

On the other hand, in a case where it is determined in step S56 that all the frames of the new 3D model have been selected, the processing proceeds to step S58, and by the effect processing (treatment processing), the rendering unit 35 generates a frame for which a free viewpoint image has not been generated. That is, the free viewpoint image of the frame which is the image to be generated by the effect processing in step S55 is generated in step S58.

The free viewpoint image generated by the effect processing in step S58 is an image having the degree of coincidence lower than the threshold value TH2. Here, it is assumed that a pₓ-th frame is a frame having a low degree of coincidence.

For example, the rendering unit 35 generates the free viewpoint image of the pₓ-th frame by combining the free viewpoint images of (pₓ-1)-th and (pₓ+1)-th frames before and after the pₓ-th frame. Alternatively, the free viewpoint image of the pₓ-th frame generated using the pₓ-th frame of the new 3D model, the free viewpoint image of the (pₓ-1)-th frame, and the free viewpoint image of the (pₓ+1)-th frame may be combined at a ratio of 70%, 15%, and 15%, respectively.

Alternatively, the free viewpoint image of the previous (pₓ-1)-th frame may be used as the free viewpoint image of the pₓ-th frame as it is.

Alternatively, in the new 3D model data generation process of Fig. 7, in a case where the similarity search unit 34 supplies the rendering unit 35 with a plurality of frames (for example, three frames) including frames before and after the coincident frame of the existing 3D model 51, for example, a later frame of the (pₓ-1)-th frame in the temporal direction among free viewpoint images of three frames generated from the (pₓ-1)-th existing 3D model 51 may be used as the free viewpoint image of the pₓ-th frame.

In a case where the degree of coincidence is set in units of body parts, the effect processing may also be performed in units of body parts to generate the free viewpoint image.

In step S59, the rendering unit 35 causes the display device 13 to display the moving image obtained by viewing the new 3D model from the predetermined virtual viewpoint. That is, the rendering unit 35 causes the display device 13 to display the moving image of the free viewpoint image based on the new 3D model generated in steps S51 to S58 described above in order from the first frame.

The rendering unit 35 determines the frame having the largest degree of coincidence among the degrees of coincidence of the frames of the new 3D model as a key frame, and performs control not to perform the effect processing on the new 3D model of the key frame, whereby the free viewpoint image with high accuracy can be generated.

Then, the free viewpoint image display process as step S6 in Fig. 6 ends, and the entire moving image generation process also ends.

In the flowchart of Fig. 6, in the image processing system 1 of Fig. 1, a series of processing has been described such that the processing is continuously executed to image the subject by the imaging device 11, generate the new 3D model, and display the 2D moving image obtained by viewing the generated new 3D model from the predetermined virtual viewpoint on the display device 13. However, this processing can be partially executed in units of divided processes as necessary. For example, the processing can be divided into a process of imaging the subject by the imaging device 11 and inputting the moving image 71M as an input moving image to the image processing device 12, a process of generating the new 3D model similar to the input moving image 71M, a process of generating and displaying the 2D moving image obtained by viewing the new 3D model from the predetermined virtual viewpoint, and the like to be executed at an arbitrary timing.

According to the moving image generation process of the image processing system 1 described above, the 3D model (new 3D model) with the same high accuracy as in the case of imaging with the same number of imaging as in the existing 3D models stored in the 3D model DB 33 can be generated by using the moving image 71M captured by a small number of imaging devices 11 as the input moving image, and furthermore, the moving image (2D moving image) obtained by viewing the free viewpoint image of the 3D model from the free viewpoint can be generated and displayed. That is, the free viewpoint image with high accuracy can be generated and displayed with simple imaging by the small number of imaging devices 11.

The 3D model DB 33 of the image processing device 12 stores the bone information as the moving image data (3D model data) of the existing 3D model. The similarity search unit 34 compares the joint position of the person calculated as the feature amount from each frame of the input moving image 71M by the feature amount calculation unit 32 with the bone information of the existing 3D model, so that the frame of the existing 3D model 51 having a motion (posture) similar to that of the person as the subject can be searched for with high accuracy and high speed. The bone information is information that can be stored as text, and has a smaller data size than texture data. Therefore, according to the image processing system 1, by holding the bone information as the moving image data (3D model data) of the 3D model, it is possible to easily search for the 3D model data similar to the motion (posture) of the person as the subject.

Moreover, the frames of the existing 3D model 51 similar to the motion of the person of the frame are searched for in units of frames of the input moving image 71M by using the bone information and are smoothly connected in the time direction, so that a natural moving image can be generated.

In general, as compared with a system, such as a conventional motion capture system, in which a sensor for sensing the movement of the user is mounted on the user, and a character created by CG or a person in a liveaction video reproduces a movement similar to the sensed motion, it is prevented that the motion becomes unnatural due to a difference between the skeleton of the person (character) on the video and the skeleton of the person on which the sensor is mounted, it is not necessary to mount the sensor.

The degree of coincidence between the motion (frame) of the input moving image 71M and the existing 3D model 51 is calculated, and in a case where the degree of coincidence is lower than the predetermined threshold value TH2, the free viewpoint image is generated by the effect processing, so that the moving image with more natural movement can be generated.

For frames having a degree of coincidence lower than the predetermined threshold value TH2, in principle, the free viewpoint image is generated by the effect processing of the previous and later free viewpoint images generated by the rendering process from the new 3D model. However, in a case where connection between the frames is excessively unnatural, a combined 3D model obtained by combining the previous and later new 3D models may be generated, and the free viewpoint image may be generated from the combined 3D model.

Note that, in the above-described embodiment, the example has been described in which the moving image of the free viewpoint image is generated by using the moving image as an input. However, since the similar frame of the existing 3D model 51 is searched for in units of frames, the similar frame of the existing 3D model 51 can be searched for even when the input is not the moving image but one still image. That is, a process of searching for the image having the similar motion by using the bone information according to the present technology can be applied not only to moving images but also to still images.

Furthermore, in the generation of the moving image of the image processing system 1 described above, the entire body of the person is set as the search target of the similar motion, but the search target may be a part of the body part of the person such as the movement of the foot or hand and the facial expression. In such a case, even in a case where the entire body is included in the input moving image 71M, only a desired body part can be searched by designating the desired body part. It is a matter of course that the same applies to a case where only a part of the body part are shown in the input moving image 71M.

### <5. Example of high frame rate conversion>

In the above-described embodiment, the moving image of the free viewpoint image is generated with the same number of frames as the number of frames of the input moving image 71M.

In a case where the frame rate of the existing 3D model 51 stored in the 3D model DB 33 is higher (high frame rate) than the frame rate of the input moving image 71M, it is also possible to generate and display the moving image of the free viewpoint image having a high frame rate higher than the frame rate of the input moving image 71M.

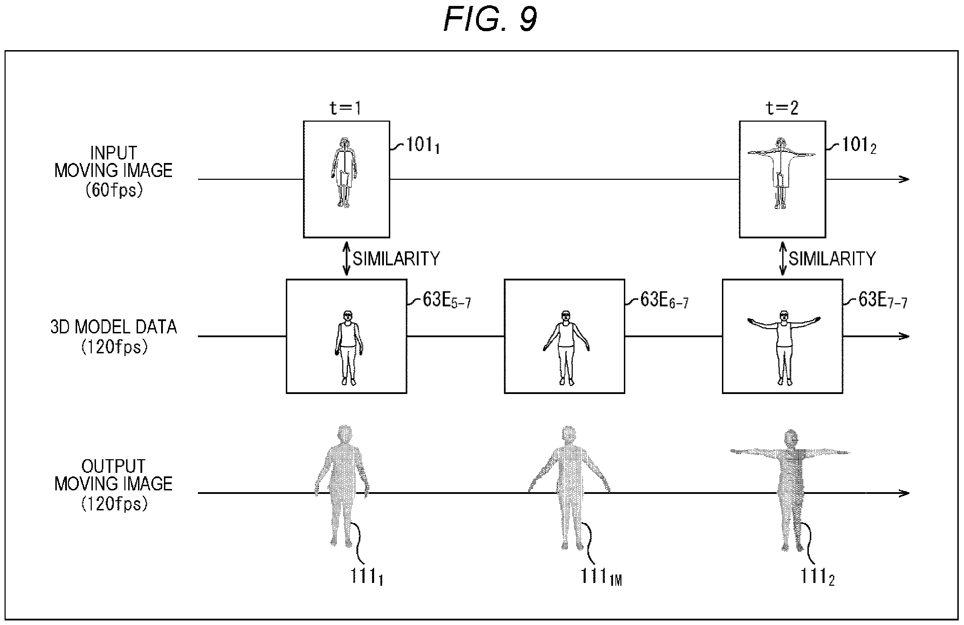

Fig. 9 illustrates an example in which the moving image of the free viewpoint image having the higher frame rate than the frame rate of the input moving image is generated and displayed.

In the example of Fig. 9, the frame rate of the input moving image is 60 fps, and the captured image 63 E₅₋₇, which is captured by the seventh imaging device 41-7, of the fifth frame of the existing 3D model 51E is searched for as the frame of the existing 3D model 51 similar to a captured image 101₁ of the input moving image at a time t = 1.

Furthermore, the captured image 63E₇₋₇, which is captured by the seventh imaging device 41-7, of the seventh frame of the same existing 3D model 51E is searched for as the frame of the existing 3D model 51 similar to a captured image 101₂ of the input moving image at the time t = 2. Here, the existing 3D model 51E is 3D model data having a frame rate of 120 fps.

In this case, the image processing device 12 can use the fifth frame of the existing 3D model 51E for the frame 111₁ of the new 3D model 111 at the time t = 1, and can use the seventh frame of the existing 3D model 51E for the frame 111₂ of the new 3D model 111 at the time t = 2.

Moreover, the image processing device 12 can generate a captured image 63E₆₋₇ of the sixth frame captured by the seventh imaging device 41-7 between the fifth frame and the seventh frame of the existing 3D model 51E of 120 fps as a frame 111_{1M} of the new 3D model 111 at the time t = 1M between time t = 1 and t = 2, and generate and display the moving image of the free viewpoint image of a high frame rate.

### <6. Second embodiment of image processing system>

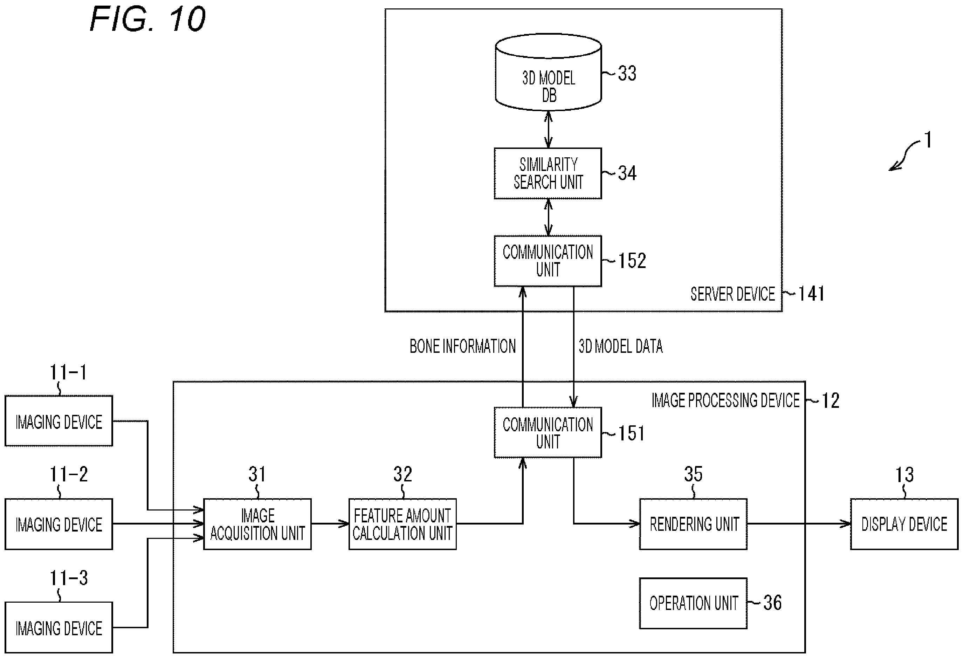

Fig. 10 is a block diagram illustrating a configuration example of a second embodiment of the image processing system to which the present technology is applied.

In the second embodiment of Fig. 10, the portions corresponding to those of the first embodiment illustrated in Fig. 1 are designated by the same reference numerals, and the description thereof will be appropriately omitted.

The image processing system 1 according to the second embodiment includes the plurality of imaging devices 11 (11-1 to 11-3), the image processing device 12, a server device 141, and the display device 13.

The image processing device 12 includes the image acquisition unit 31, the feature amount calculation unit 32, the rendering unit 35, the operation unit 36, and a communication unit 151. The server device 141 includes the 3D model DB 33, the similarity search unit 34, and a communication unit 152.

When the image processing system 1 according to the second embodiment is compared with the first embodiment in Fig. 1, some functions of the image processing device 12 are moved to the server device 141, and predetermined information is exchanged between the image processing device 12 and the server device 141.

The communication unit 151 of the image processing device 12 communicates with the communication unit 152 of the server device 141 via a predetermined network. The communication unit 152 of the server device 141 communicates with the communication unit 151 of the image processing device 12 via a predetermined network. The network between the image processing device 12 and the server device 141 includes, for example, the Internet, a telephone line network, a satellite communication network, various local area networks (LAN) including Ethernet (registered trademark), a wide area network (WAN), a dedicated line network such as an Internet protocol-virtual private network (IP-VPN), and the like.

More specifically, the communication unit 151 of the image processing device 12 transmits the bone information which is the feature amount calculated by the feature amount calculation unit 32 to the communication unit 152 of the server device 141, receives the moving image data (3D model data) of the new 3D model transmitted from the communication unit 152 of the server device 141, and supplies the moving image data to the rendering unit 35.

The communication unit 152 of the server device 141 receives the bone information as the feature amount transmitted from the communication unit 151 of the image processing device 12 and supplies the bone information to the similarity search unit 34. The similarity search unit 34 searches the 3D model DB 33 for the motion similar to the bone information calculated by the image processing device 12, and generates the moving image data of the new 3D model. Then, the communication unit 152 transmits the moving image data (3D model data) of the new 3D model generated by the similarity search unit 34 to the communication unit 151 of the image processing device 12. The communication unit 152 functions as an output unit which outputs the searched moving image data of the new 3D model to the image processing device 12.

As described above, a part of the processing executed by the image processing device 12 in the first embodiment can be configured to be executed by another device such as the server device 141.

Note that the functions shared by the image processing device 12 and the server device 141 are not limited to the above-described example, and can be arbitrarily determined.

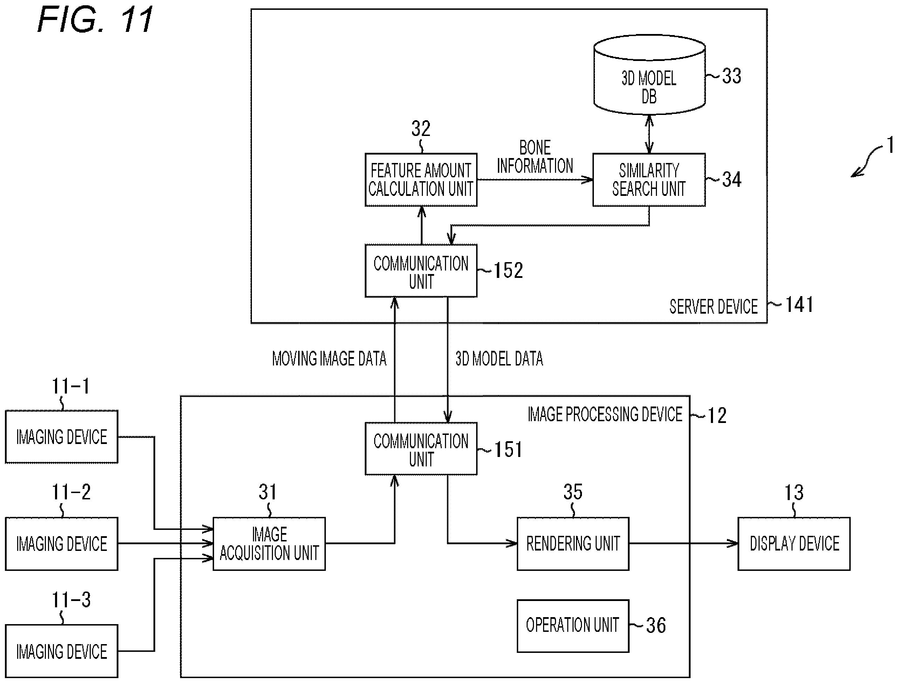

For example, the bone information as the feature amount input to the similarity search unit 34 may be generated by another device (image processing device 12) as in the configuration of Fig. 10, or as illustrated in Fig. 11, the server device 141 may also include the feature amount calculation unit 32 and may be configured to input the bone information generated from the moving image data in its own device. In this case, the image processing device 12 performs a process of acquiring the moving image data captured by three imaging devices 11-1 to 11-3 and transmitting the data to the server device 141, and a process of acquiring the moving image data (3D model data) of the new 3D model generated by the server device 141, generating the moving image (2D moving image) from the free viewpoint, and displaying the moving image on the display device 13. The server device 141 searches for the similar existing 3D model 51 on the basis of the calculation of the feature amount of the input moving image and the calculated feature amount and generates the new 3D model corresponding to the input moving image.

In a case where the 3D model data of the new 3D model is transmitted via a network, the 3D model data can be encoded by an encoding method such as the AVC method or the HEVC method and transmitted. However, for a frame having a large degree of coincidence such as the key frame, it is preferable to perform the transmission such that the increase of a compression rate is avoided and compression is suppressed as much as possible. Furthermore, it is preferable to perform the transmission such that which is the key frame is known. In a case where the rendering unit 35 generates the free viewpoint image (rendering process), the free viewpoint image is generated with the weight of the key frame increased, so that the free viewpoint image can be generated and displayed with high accuracy.

When the 3D model data of the new 3D model is transmitted via the network, in a case where a data size is large, and a load is large, only bone information in the 3D model data of the new 3D model may be transmitted to the image processing device 12, and the free viewpoint image may be generated and displayed on the basis of the bone information by using the input moving image or the texture stored therein in advance. In a case where only bone information is transmitted, the bone information of all frames of the moving image may be transmitted, or the bone information of a part of frames sampled uniformly or randomly may be transmitted.

### <7. Third Embodiment of image processing system>

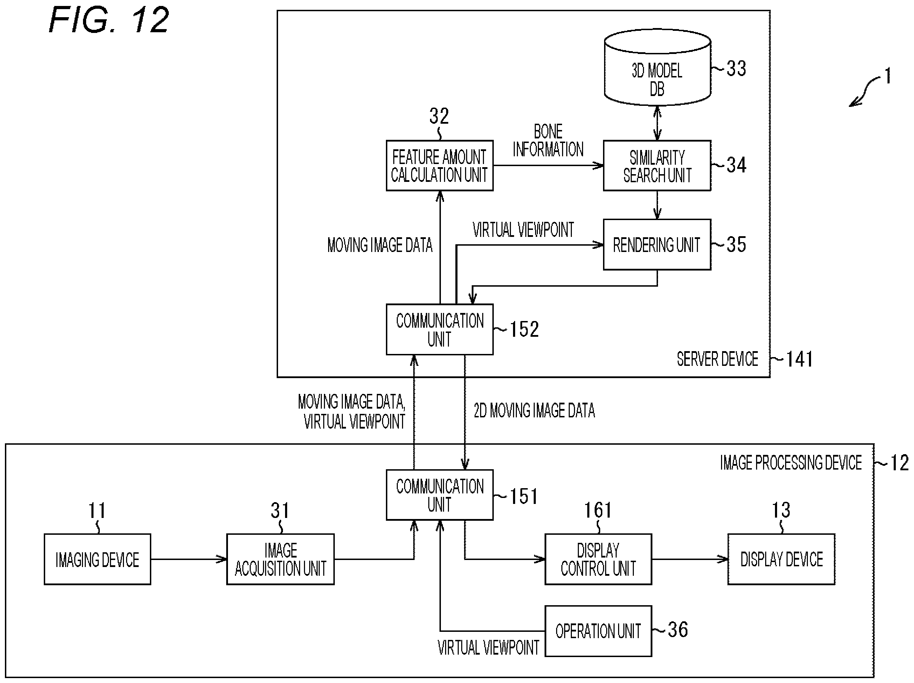

Fig. 12 is a block diagram illustrating a configuration example of a third embodiment of the image processing system to which the present technology is applied.

In the third embodiment of Fig. 12, the portions corresponding to those of a modification of the second embodiment illustrated in Fig. 11 are designated by the same reference numerals, and the description thereof will be appropriately omitted.

In the image processing system 1 according to the third embodiment, one imaging device 11 and one display device 13 are incorporated as a part of the image processing device 12, and the image processing system is configured by the image processing device 12 and the server device 141. Furthermore, the rendering unit 35 is provided not in the image processing device 12 but in the server device 141, and a display control unit 161 is newly provided in the image processing device 12.

The image processing device 12 transmits the moving image data captured by the imaging device 11 to the server device 141. Furthermore, the virtual viewpoint designated by the user in the operation unit 36 is also transmitted from the image processing device 12 to the server device 141. The virtual viewpoint received by the server device 14 is supplied to the rendering unit 35.

The rendering unit 35 generates the 2D moving image obtained by viewing the new 3D model generated by the similarity search unit 34 from the virtual viewpoint transmitted from the image processing device 12, and transmits the 2D moving image to the image processing device 12 via the communication unit 152.

The display control unit 161 of the image processing device 12 causes the display device 13 to display the 2D moving image acquired via the communication unit 151.

It is sufficient if the image processing device 12 having such a configuration can perform a process of imaging the subject by the imaging device 11 and displaying the 2D moving image generated by the server device 141, and the image processing device can be easily realized by, for example, a smartphone of the user or the like.

### <8. Modification>

In the above-described embodiment, the example has been described in which the subject is set as a person, and the new 3D model similar to the moving image in which the person performs a predetermined motion is generated and displayed. However, the subject is not limited to the person (human). For example, the subject may be an animal such as a cat or a dog, or may be an article such as a baseball bat or a golf club. The new 3D model can be generated and displayed by using a moving image such as a swing trajectory of a bat or a golf club as the input moving image.

In the above-described embodiment, the degree of coincidence between the motion (frame) of the input moving image and the existing 3D model is calculated and used as a reference for the necessity of the effect processing when generating the free viewpoint image. In addition, the degree of coincidence between the motion of the input moving image and the existing 3D model may be output as a numerical value as it is and presented (visualized) to the user. For example, in a case where the input moving image is the motion of the user, and the motion of the existing 3D model is the motion of a professional player, how much the motion of the user of the input moving image matches the motion of the professional player is quantified and output, which is useful for sports analysis and the like.

### <9. Computer configuration example>

The above-described series of processing can be executed by hardware or software. In a case where the series of processing is executed by software, a program configuring the software is installed in a computer. Here, the computer includes a microcomputer incorporated in dedicated hardware, a general-purpose personal computer capable of executing various functions by installing various programs, and the like, for example.

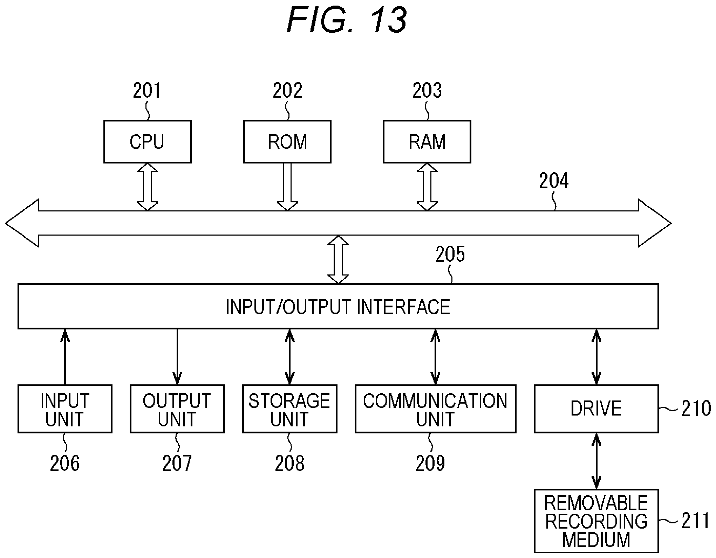

Fig. 13 is a block diagram illustrating a configuration example of the hardware of the computer that executes the above-described series of processing by the program.

In the computer, a central processing unit (CPU) 201, a read only memory (ROM) 202, and a random access memory (RAM) 203 are mutually connected by a bus 204.

Moreover, an input/output interface 205 is connected to the bus 204. An input unit 206, an output unit 207, a storage unit 208, a communication unit 209, and a drive 210 are connected to the input/output interface 205.

The input unit 206 includes a keyboard, a mouse, a microphone, a touch panel, an input terminal, and the like. The output unit 207 includes a display, a speaker, an output terminal, and the like. The storage unit 208 includes a hard disk, a RAM disk, a nonvolatile memory, and the like. The communication unit 209 includes a network interface and the like. The drive 210 drives a removable recording medium 211 such as a magnetic disk, an optical disk, a magneto-optical disk, or a semiconductor memory.

In the computer configured as described above, the above-described series of processing is performed, for example, in such a manner that the CPU 201 loads the program stored in the storage unit 208 into the RAM 203 via the input/output interface 205 and the bus 204 and executes the program. The RAM 203 also appropriately stores data and the like necessary for the CPU 201 to execute various processes.

The program executed by the computer (CPU 201) can be provided by being recorded in the removable recording medium 211 as a package medium or the like, for example. Furthermore, the program can be provided via a wired or wireless transmission medium such as a local area network, the Internet, or digital satellite broadcasting.

In the computer, the program can be installed in the storage unit 208 via the input/output interface 205 by mounting the removable recording medium 211 to the drive 210. Furthermore, the program can be received by the communication unit 209 via a wired or wireless transmission medium and installed in the storage unit 208. In addition, the program can be installed in the ROM 202 or the storage unit 208 in advance.

Note that, in the present specification, the steps described in the flowcharts may be executed not only in chronological order according to the described order, but also in parallel or at necessary timing such as when a call is made without being necessarily processed in chronological order.

In the present specification, the system means a set of a plurality of components (devices, modules (parts), and the like), and it does not matter whether or not all the components are in the same housing. Therefore, both a plurality of devices which is housed in separate housings and connected via a network and one device in which a plurality of modules is housed in one housing are the systems.

The embodiments of the present technology are not limited to the above-described embodiments, and various modifications can be made without departing from the gist of the present technology.

For example, a mode in which all or some of the plurality of embodiments described above are combined can be adopted.

For example, the present technology can be configured as cloud computing in which one function is shared by a plurality of devices via a network and jointly processed.

Furthermore, each step described in the above-described flowcharts can be executed by one device, or shared and executed by a plurality of devices.

Moreover, in a case where one step includes a plurality of processes, the plurality of processes included in the one step can be executed by one device, or shared and executed by a plurality of devices.

Note that the effects described in the present specification are merely examples and are not limited, and effects other than those described in the present specification may be provided.

Note that the present technology can have the following configurations.
(1) An image processing device including:
   a storage unit that stores a plurality of 3D models and a plurality of 3D model feature amounts respectively corresponding to the plurality of 3D models;
   a search unit that searches for a 3D model having a feature amount similar to an input feature amount of a subject on the basis of the feature amount of the subject and the 3D model feature amounts stored in the storage unit; and
   an output unit that outputs the 3D model searched by the search unit.
(2) The image processing device according to (1), in which
   the feature amount of the subject is bone information of the subject, and
   the search unit compares the bone information of the subject with bone information of the 3D model stored in the storage unit to search for the 3D model having bone information similar to the bone information of the subject.
(3) The image processing device according to (1) or (2), in which
   the storage unit stores a moving image of the 3D model, and
   the search unit compares the feature amount of the subject with a corresponding feature amount of a frame of the 3D model randomly selected from the storage unit, and in a case where a degree of coincidence is lower than a predetermined threshold value, compares a corresponding feature amount of a frame obtained by shifting a time direction with respect to the selected frame with the feature amount of the subject.
(4) The image processing device according to any one of (1) to (3), in which
   the search unit determines whether a person of the subject and a person of the 3D model stored in the storage unit are same before comparing the feature amounts.
(5) The image processing device according to any one of (1) to (4), further including:
   a feature amount calculation unit that calculates the feature amount of the subject from an image obtained by imaging the subject, in which
   the search unit acquires the feature amount of the subject calculated by the feature amount calculation unit.
(6) The image processing device according to (5), in which
   the feature amount calculation unit calculates the feature amount of the subject from a plurality of images obtained by imaging the subject with a plurality of imaging devices.
(7) The image processing device according to (5), in which
   the feature amount calculation unit calculates the feature amount of the subject from one image obtained by imaging the subject with one imaging device.
(8) The image processing device according to any one of (2) to (4), in which
   the bone information of the subject is information acquired by a tracking sensor.
(9) The image processing device according to any one of (2) to (8), in which
   the storage unit stores the bone information of the 3D model as meta information of the 3D model.
(10) The image processing device according to (9), in which
   the storage unit stores a moving image of the 3D model, and stores bone information, 3D shape data, and texture data for every frame.
(11) The image processing device according to (10), in which
   the texture data includes a plurality of texture images from different viewpoints.
(12) The image processing device according to any one of (1) to (11), in which
   the search unit outputs at least 3D shape data or texture data of the searched 3D model.
(13) The image processing device according to any one of (1) to (12), further including:
   a rendering unit that generates a free viewpoint image obtained by viewing the 3D model searched by the search unit from a predetermined virtual viewpoint.
(14) The image processing device according to (13), in which
   the rendering unit generates a moving image of the free viewpoint image obtained by viewing the 3D model from the predetermined virtual viewpoint.
(15) The image processing device according to (13) or (14), in which
   the search unit also outputs a degree of coincidence of the searched 3D model, and
   the rendering unit generates the free viewpoint image by effect processing in a case where the degree of coincidence is lower than a predetermined threshold value.
(16) The image processing device according to any one of (13) to (15), in which
   the search unit compares the feature amount of the subject of an input moving image with a corresponding feature amount of a moving image of the 3D model stored in the storage unit, and
   the rendering unit generates a moving image of the free viewpoint image having the same number of frames as the number of frames of the input moving image.
(17) The image processing device according to any one of (13) to (15), in which
   the search unit compares a feature amount of the subject of the input moving image with a corresponding feature amount of a moving image of the 3D model stored in the storage unit, and
   the rendering unit generates a moving image of the free viewpoint image having a higher frame rate than the input moving image.
(18) An image processing device including:
   a rendering unit that generates a free viewpoint image obtained by viewing a 3D model, which is searched to have a feature amount similar to a feature amount of a subject on the basis of the feature amount of the subject and a stored feature amount of the 3D model, from a predetermined virtual viewpoint.
(19) A moving image data generation method including:
   generating a moving image of a free viewpoint image obtained by viewing a moving image of a 3D model, which is searched to have a feature amount similar to a feature amount of a subject on the basis of the feature amount of the subject of an input moving image and a stored feature amount of the moving image of the 3D model, from a predetermined virtual viewpoint.

### REFERENCE SIGNS LIST

- 1: Image processing system
- 11: Imaging device
- 12: Image processing device
- 13: Display device
- 31: Image acquisition unit
- 32: Feature amount calculation unit
- 33: 3D model DB
- 34: Similarity search unit
- 35: Rendering unit
- 36: Operation unit
- 141: Server device
- 201: CPU
- 202: ROM
- 203: RAM
- 206: Input unit
- 207: Output unit
- 208: Storage unit
- 209: Communication unit
- 210: Drive

## Claims

1. An image processing device comprising:
a storage unit that stores a plurality of 3D models and a plurality of 3D model feature amounts respectively corresponding to the plurality of 3D models;
a search unit that searches for a 3D model having a feature amount similar to an input feature amount of a subject on a basis of the feature amount of the subject and the 3D model feature amounts stored in the storage unit; and
an output unit that outputs the 3D model searched by the search unit.

2. The image processing device according to claim 1, wherein
the feature amount of the subject is bone information of the subject, and
the search unit compares the bone information of the subject with bone information of the 3D model stored in the storage unit to search for the 3D model having bone information similar to the bone information of the subject.

3. The image processing device according to claim 1, wherein
the storage unit stores a moving image of the 3D model, and
the search unit compares the feature amount of the subject with a corresponding feature amount of a frame of the 3D model randomly selected from the storage unit, and in a case where a degree of coincidence is lower than a predetermined threshold value, compares a corresponding feature amount of a frame obtained by shifting a time direction with respect to the selected frame with the feature amount of the subject.

4. The image processing device according to claim 1, wherein
the search unit determines whether a person of the subject and a person of the 3D model stored in the storage unit are same before comparing the feature amounts.

5. The image processing device according to claim 1, further comprising:
a feature amount calculation unit that calculates the feature amount of the subject from an image obtained by imaging the subject, wherein
the search unit acquires the feature amount of the subject calculated by the feature amount calculation unit.

6. The image processing device according to claim 5, wherein
the feature amount calculation unit calculates the feature amount of the subject from a plurality of images obtained by imaging the subject with a plurality of imaging devices.

7. The image processing device according to claim 5, wherein
the feature amount calculation unit calculates the feature amount of the subject from one image obtained by imaging the subject with one imaging device.

8. The image processing device according to claim 2, wherein
the bone information of the subject is information acquired by a tracking sensor.

9. The image processing device according to claim 2, wherein
the storage unit stores the bone information of the 3D model as meta information of the 3D model.

10. The image processing device according to claim 9, wherein
the storage unit stores a moving image of the 3D model, and stores bone information, 3D shape data, and texture data for every frame.

11. The image processing device according to claim 10, wherein
the texture data includes a plurality of texture images from different viewpoints.

12. The image processing device according to claim 1, wherein
the search unit outputs at least 3D shape data or texture data of the searched 3D model.

13. The image processing device according to claim 1, further comprising:
a rendering unit that generates a free viewpoint image obtained by viewing the 3D model searched by the search unit from a predetermined virtual viewpoint.

14. The image processing device according to claim 13, wherein
the rendering unit generates a moving image of the free viewpoint image obtained by viewing the 3D model from the predetermined virtual viewpoint.

15. The image processing device according to claim 13, wherein
the search unit also outputs a degree of coincidence of the searched 3D model, and
the rendering unit generates the free viewpoint image by effect processing in a case where the degree of coincidence is lower than a predetermined threshold value.

16. The image processing device according to claim 13, wherein
the search unit compares the feature amount of the subject of an input moving image with a corresponding feature amount of a moving image of the 3D model stored in the storage unit, and
the rendering unit generates a moving image of the free viewpoint image having the same number of frames as the number of frames of the input moving image.

17. The image processing device according to claim 13, wherein
the search unit compares the feature amount of the subject of the input moving image with a corresponding feature amount of a moving image of the 3D model stored in the storage unit, and
the rendering unit generates a moving image of the free viewpoint image having a higher frame rate than the input moving image.

18. An image processing device comprising:
a rendering unit that generates a free viewpoint image obtained by viewing a 3D model, which is searched to have a feature amount similar to a feature amount of a subject on a basis of the feature amount of the subject and a stored feature amount of the 3D model, from a predetermined virtual viewpoint.

19. A moving image data generation method comprising:
generating a moving image of a free viewpoint image obtained by viewing a moving image of a 3D model, which is searched to have a feature amount similar to a feature amount of a subject on a basis of the feature amount of the subject of an input moving image and a stored feature amount of the moving image of the 3D model, from a predetermined virtual viewpoint.
